# EUROPEAN PATENT APPLICATION

(11) **EP 4 692 171 A1**
(43) Date of publication of application: **11.02.2026**
(21) Application number: 24780658.1
(22) Date of filing: 28.03.2024
(51) Int. Cl.: C08G 77/38, B22C 3/00, B22D 17/20, C08G 77/14, C08K 5/101, C08L 83/06

(54) **BRANCHED CARBOXYLIC ACID-MODIFIED SILICONE AND RELEASE AGENT COMPOSITION FOR DIE CASTING CONTAINING SAME**

(30) Priority: 31.03.2023 JP 2023056996
(71) Applicant: Dow Toray Co., Ltd., Tokyo 140-8617 (JP)
(72) Inventor: SUGIURA Tsunehito, Ichihara-shi Chiba 299-0108 (JP); WAKITA Mari, Ichihara-shi Chiba 299-0108 (JP)
(74) Representative: Elkington and Fife LLP
(86) International application number: PCT/JP2024/012687
(87) International publication number: WO 2024/204558

(57) **Abstract**

PROBLEM

To provide a branched carboxylic acid-modified silicone which has excellent heat resistance when used at high temperatures, has excellent adhesion to a mold, vertical holding properties, and spreadability, even when used in a small amount, and can provide excellent mold releasability, and to provide a mold release agent for die casting containing the same.

SOLUTION

A branched carboxylic acid-modified silicone, containing in a molecule: 0.1 to 5.0 mass% of structural units expressed by RSiO_{3/2}, R representing a monovalent hydrocarbon group; and 0.5 to 40.0 mass% of structural units expressed by RR'SiO_{2/2}, R representing a monovalent hydrocarbon group and R' being a carboxylic acid-containing organic group, and a mold release agent composition for die casting containing the branched carboxylic acid-modified silicone (including in the form an oil agent dispersion or an oil-in-water emulsion).

## Description

### TECHNICAL FIELD

The present invention relates to a branched carboxylic acid-modified silicone that exhibits excellent mold releasability even in small amounts, and a mold release agent composition for die casting containing the same.

### BACKGROUND ART

When producing die cast molded products containing aluminum alloys, magnesium alloys, and the like, a mold release agent for die casting containing silicone is applied to the die in order to impart releasability. For example, Patent Document 1 discloses a mold release agent composition for die casting which contains a linear silicone compound and has excellent adhesion, heat resistance, and the like. Patent Document 2 discloses a mold release agent composition for die casting which contains an organopolysiloxane having at least one branched structural unit of a T-type structure or a Q-type structure and has good releasability from a high-temperature die.

Furthermore, Patent Document 3 discloses an emulsion composition for an aluminum die cast mold release agent which contains a paintable organopolysiloxane modified with an alkyl group, an aralkyl group, a carboxyalkyl group, or a carboxylate group, in which the amount of alkali metal is reduced and which reduces the occurrence of roughness or unevenness on the surface of a molded product. However, these documents make no mention nor suggestion whatsoever of silicone compounds containing a specific amount of branched structures and carboxylic acid-modifying groups, or of the advantageous effects derived from such structures.

### RELATED ART DOCUMENTS

### PATENT DOCUMENTS

Patent Document 1: Japanese Unexamined Patent Application Publication 2013-166176
Patent Document 2: Japanese Unexamined Patent Application Publication 2019-118925
Patent Document 3: Japanese Unexamined Patent Application Publication H04-84643

### SUMMARY OF THE INVENTION

### PROBLEM TO BE SOLVED BY THE INVENTION

On the other hand, the inventors of the present application have found new problems regarding the mold release agent composition for die casting in addition to previously known problems. In the field of aluminum die casting, there is an international technological trend of increasing the size and integration of molded products, such as vehicles and the like, and reducing the environmental load and impact. In contrast to the use of large amounts of mold release agent compositions for die casting that was previously permitted, it is expected that in the future that there will be a demand in the market for a mold release agent composition for die casting that enables the production of large molded products with a small application amount. However, conventional mold release agent compositions for die casting have difficulty with adhesion and ensuring sufficient application area to a die when using a small amount, and there is a concern that future market demands may not be met sufficiently. In addition, from the viewpoint of applying small amounts and reduction of environmental impact, it is expected that the formulation of the mold release agent composition for die casting will be changed from a conventional mainstream emulsion type to a solvent-diluted type or that both will be used in combination. However, conventional silicones for mold release agents still have room for improvement in terms of dilution with a solvent.

The present invention was made to solve the above-mentioned problems, and an object is to provide a silicone compound and a mold release agent for die casting containing the silicone compound, which have excellent heat resistance when used at high temperatures, and which also have excellent adhesion to a die, vertical holding properties, and spreadability, even when used in small amounts, and which can achieve excellent releasability. Furthermore, an object of the present invention is to provide a mold release agent composition for die casting which has sufficient dilution properties for practical use, not only in the form of an emulsion, but also in the form of a solvent-diluted formulation, and which can also provide excellent releasability when using a small amount.

### MEANS FOR SOLVING THE PROBLEM

As a result of conducting diligent research on the problem described above, the present inventors arrived at the present invention. In other words, the problem of the present invention can be resolved by a branched carboxylic acid-modified silicone, containing in a molecule: 0.1 to 5.0 mass% of structural units expressed by RSiO_{3/2}, R representing a monovalent hydrocarbon group; and 0.5 to 40.0 mass% of structural units expressed by RR'SiO_{2/2}, R representing a monovalent hydrocarbon group and R' being a carboxylic acid-containing organic group, and a mold release agent composition for die casting containing the branched carboxylic acid-modified silicone.

Specifically, the problem of the present invention can be resolved by:
[1] A branched carboxylic acid-modified silicone, comprising in a molecule: 0.1 to 5.0 mass% of structural units expressed by RSiO_{3/2}, R representing a monovalent hydrocarbon group; and 0.5 to 40.0 mass% of structural units expressed by RR'SiO_{2/2}, R representing a monovalent hydrocarbon group and R' being a carboxylic acid-containing organic group.
[2] The aforementioned branched carboxylic acid-modified silicone, wherein R represents a monovalent hydrocarbon group selected from alkyl groups, aryl groups, and aralkyl groups, and R' represents a carboxylic acid-containing organic group expressed by -R²-COOH, R² representing an alkylene group having 2 to 30 carbon atoms.
[3] The aforementioned branched carboxylic acid-modified silicone, wherein the branched carboxylic acid-modified silicone has one or more hydrocarbon groups selected from long chain alkyl groups having 7 to 30 carbon atoms and an aralkyl group in a molecule.
[4] The aforementioned branched carboxylic acid-modified silicone, expressed by:
   the average unit formula:

   (Me₃SiO_{1/2})(Me₂SiO_{2/2})a(MeR^{C}SiO_{2/2})x(MeR^{A}SiO_{2/2})y(MeR^{L}SIO_{2/2})z(RSiO_{3/2})b

   {where R represents a monovalent hydrocarbon group, Me represents a methyl group, R^{C} represents a carboxylic acid-containing organic group expressed by -R²-COOH, where R² represents an alkylene group having 2 to 30 carbon atoms, R^{L} represents a long chain alkyl group having 7 to 30 carbon atoms, R^{A} is an aralkyl group having 7 to 30 carbon atoms, and a, b, x, and z are such that when the number of structural units expressed by Me₃SiO_{1/2} in the molecule is 1, a is a number in a range of 2 to 100, b is a number in a range of 0.4 to 5.0, x is a number in a range of 3 to 50, y is a number in a range of 5 to 100, and z is a number in a range of 5 to 100.
[5] The aforementioned branched carboxylic acid-modified silicone, wherein a 20 mass% oil agent dispersion has viscosity in a range of 10 to 200 mPa·s at 25°C.
[6] The aforementioned branched carboxylic acid-modified silicone according to [5], wherein the oil agent is isotridecyl isononanoate."

Likewise, the problem of the present invention can be resolved by:
"[7] A mold release agent composition for die casting, containing the branched carboxylic acid-modified silicone.
[8] A mold release agent composition for die casting, containing: (A) the branched carboxylic acid-modified silicone; and (B) one or more oil agents selected from polar oils, hydrocarbon oils, and mixed solvents thereof.
[9] A mold release agent composition for die casting, containing: (A1) a branched carboxylic acid-modified silicone according to [4]; and (B1) isotridecyl isononanoate.
[10] The mold release agent composition for die casting, which is applied by spraying.
[11] The mold release agent composition for die casting, which is in the form of an oil-in-water emulsion."

### EFFECT OF THE INVENTION

The present invention can provide a branched carboxylic acid-modified silicone which has excellent heat resistance when used at high temperatures, has excellent adhesion to a mold, vertical holding properties, and spreadability, even when used in a small amount, and can provide excellent mold releasability, and to provide a mold release agent for die casting containing the same. Furthermore, branched carboxylic acid-modified silicone of the present invention can provide a mold release agent composition for die casting which has sufficient dilution properties for practical use, not only in the form of an emulsion, but also in the form of a solvent-diluted formulation, and which can also provide excellent releasability when using a small amount.

### BRIEF DESCRIPTION OF THE DRAWINGS

FIG. 1 is a diagram depicting the relationship between the amount of T units and the spreadability (cm) of a 20 mass% oil dispersion of a branched carboxylic acid-modified silicone according to the present invention.
FIG. 2 is a diagram depicting the relationship between the amount of carboxylic acid-modified units and the fluidity (seconds) of a 20 mass% oil dispersion of a branched carboxylic acid-modified silicone according to the present invention.
FIG. 3 is a graph depicting the relationship between the amount of T units and the fluidity (seconds) of a 20 mass% oil dispersion of a branched carboxylic acid-modified silicone according to the present invention.

### PREFERRED MODE FOR CARRYING OUT THE INVENTION

### [Branched carboxylic acid-modified silicone]

The branched carboxylic acid-modified silicone of the present invention will be further described below in detail. The branched carboxylic acid-modified silicone according to the present invention contains structural units expressed by RSiO_{3/2}, R representing a monovalent hydrocarbon group (hereinafter sometimes referred to simply as "T units"), and structural units expressed by RR'SiO_{2/2}, R representing a monovalent hydrocarbon group and R' representing a carboxylic acid-containing organic group, in a certain quantitative range in each molecule. By containing these structures in combination in a certain quantitative range, the branched carboxylic acid-modified silicone according to the present invention will, in addition to heat resistance, have excellent adhesion to a mold, vertical holding properties, and spreadability, even when used in a small amount, and can achieve excellent releasability.

The structural units (T units) expressed by RSiO_{3/2} (R represents a monovalent hydrocarbon group) are structural units that are introduced to impart appropriate spreadability on a mold to the branched carboxylic acid-modified silicone and to secure a sufficient coating area, even when used in a small amount, by being present in a certain quantitative range in each molecule. Specifically, the T unit must be present in a range of 0.1 to 5.0 mass%, and preferably in a range of 0.1 to 3.5 mass%, with respect to the entire molecule of the branched carboxylic acid-modified silicone. On the other hand, when the amount of T units in the molecule is less than the lower limit, the expected spreadability may not be achieved, and when the amount of T units exceeds the upper limit, the surface tension of the entire molecule is excessively decreased, and even when the molecule contains the carboxylic acid-containing organic group described below, the vertical holding property and the like may be impaired.

The structural unit expressed by RR'SiO_{2/2}, R representing a monovalent hydrocarbon group and R' representing a carboxylic acid-containing organic group, is a structural unit that, when used in combination with the T units in a certain quantitative range, has a viscosity adjusting effect on the entire branched carboxylic acid-modified silicone and optimizes the surface tension thereof, and thus is a structural unit that is introduced to improve adhesion to the mold and the vertical holding properties. In conventional technology, these units are known to perform a crosslinking reaction for the purpose of increasing the viscosity of the organopolysiloxane component used in the mold release agent, but in the present invention, there is a practical advantage that the viscosity can be adjusted without performing a crosslinking reaction, by introducing a carboxylic acid-modified group and adjusting the amount of the carboxylic acid-modified group that is introduced. By using the T units, the branched carboxylic acid-modified silicone according to the present invention can be thinly spread even when using a small amount and can ensure a coating area, but by introducing a certain amount of the carboxylic acid-containing organic group, the surface tension of the entire molecule is optimized, the coating surface is uniformly and sufficiently adhered to the mold even as a thin film coating, the coating surface is maintained even in a vertical direction, and thus non-uniformity of the release layer can be prevented, and cissing and deterioration of the releasability due to sagging can be prevented.

On the premise of the quantitative range of T units, the structural units containing a carboxylic acid-containing organic group must be present in a range of 0.5 to 40.0 mass%, preferably in a range of 3.0 to 35.0 mass%, and particularly preferably in a range of 5.0 to 30.0 mass%, with respect to the entire molecule of the branched carboxylic acid-modified silicone. On the other hand, when the amount of the structural units containing a carboxylic acid-containing organic group in the molecule is less than the lower limit, a sufficient viscosity adjusting effect for ensuring appropriate adhesion and vertical holding properties might not be obtained. On the other hand, when the amount of structural units containing a carboxylic acid-containing organic group in the molecule exceeds the upper limit, the viscosity of the entire molecule becomes excessive, and the spreadability required for use of a small amount and thin film application may be impaired.

The branched carboxylic acid-modified silicone according to the present invention preferably has fluidity at room temperature (25°C), and is particularly preferably in a liquid form having a viscosity of 100,000 mPa·s or less at 25°C. On the other hand, the branched carboxylic acid-modified silicone according to the present invention can be used in the form of an oil dispersion, and from the viewpoint of handling workability and releasability when only a small amount is applied, the viscosity at 25°C for the form of a 20 mass% oil agent dispersion is preferably in a range of 10 to 200 mPa·s, and particularly preferably in a range of 10 to 100 mPa·s. Herein, the oil agent used in the 20 mass% oil agent dispersion is not particularly limited, but the branched carboxylic acid-modified silicone according to the present invention has particularly excellent solubility and dispersibility in isotridecyl isononanoate, as a practical evaluation standard of the molecular viscosity, so the viscosity at 25°C of the 20 mass% isotridecyl isononanoate dispersion is in a range of 10 to 200 mPa·s, and particularly preferably in a range of 10 to 100 mPa·s. However, the branched carboxylic acid-modified silicone according to the present invention clearly may be used by dispersing in other oil agents besides isotridecyl isononanoate.

The branched carboxylic acid-modified silicone and the oil dispersion thereof according to the present invention have heat resistance at a high temperature sufficient for practical use and are stable, so when liquid at 25°C, they are uniformly spread on a mold and will easily adhere to the mold when applied to the mold at a high temperature. Furthermore, when the mold release agent composition for die casting described later is repeatedly sprayed on a mold, the mold release agent adhering to the mold is easily washed away by the subsequent mold release agent, and therefore a property of inhibiting deposition on the mold (mold deposition inhibition) is also excellent.

The branched carboxylic acid-modified silicone according to the present invention may further contain, within a range of containing the aforementioned structural units, one or more structural units selected from structural units expressed by R₃SiO_{1/2} (R represents a monovalent hydrocarbon group) (hereinafter sometimes referred to as "M units"), structural units expressed by R₂SiO_{2/2} (R represents a monovalent hydrocarbon group) (hereinafter sometimes referred to as "D units"), and structural units expressed by SiO_{4/2} (hereinafter sometimes referred to as "Q units") in the molecule.

The branched carboxylic acid-modified silicone according to the present invention contains a monovalent hydrocarbon group as R in the molecule, and preferably has a monovalent hydrocarbon group selected from alkyl groups, aryl groups, and aralkyl groups. In particular, the branched carboxylic acid-modified silicone according to the present invention preferably has one or more hydrocarbon groups selected from long chain alkyl groups having 7 to 30 carbon atoms and aralkyl groups, and particularly preferably contains one or more long chain alkyl groups having 7 to 20 carbon atoms and one or more aralkyl groups having 7 to 20 carbon atoms in the molecule. Similarly, the monovalent hydrocarbon group in the branched carboxylic acid-modified silicone according to the present invention, other than the one or more hydrocarbon groups selected from long chain alkyl groups and aralkyl groups having 7 to 30 carbon atoms, is preferably a methyl group (Me) or a phenyl group (Ph), from an industrial viewpoint.

As described above, the branched carboxylic acid-modified silicone according to the present invention preferably contains, in each molecule, a monovalent hydrocarbon group selected from long chain alkyl groups having 7 to 30 carbon atoms (R^{L}) and aralkyl groups having 7 to 30 carbon atoms (R^{A}), each of which is bonded to a silicon atom. In the present invention, the suitable long chain alkyl group (R^{L}) may be linear or branched, and is preferably one or more type of long chain alkyl group having 7 to 20 carbon atoms, more preferably a long chain alkyl group having 10 to 20 carbon atoms, and suitable examples thereof include long chain alkyl groups such as dodecyl groups (C12), tetradecyl groups (C14), and combinations thereof. Similarly, examples of suitable aralkyl groups having 7 to 30 carbon atoms (R^{A}) include benzyl groups, phenylethyl groups, phenylpropyl groups, and phenylbutyl groups, and aralkyl groups containing at least one branched unit expressed by -CH(CH₃)- in an alkylene group between an aryl group such as a phenyl group and a silicon atom is particularly preferable. In the present invention, R² represents particularly preferably an aralkyl group expressed by - CH₂-CH(CH₃)-C₆H₅ (α-methylstyrene group).

The branched carboxylic acid-modified silicone according to the present invention has a certain amount of structural units including T units and carboxylic acid-containing organic groups in each molecule, and preferably has one or more hydrocarbon groups selected from long chain alkyl groups having 7 to 30 carbon atoms and aralkyl groups. Furthermore, from an industrial viewpoint, the monovalent hydrocarbon group other than the long chain alkyl group and the aralkyl group in each molecule is preferably a methyl group (Me) or a phenyl group (Ph).

In the present invention, a particularly suitable branched carboxylic acid-modified silicone has a structure expressed by the following average unit formula:

(Me₃SiO_{1/2})(Me₂SiO_{2/2})a(MeR^{C}SiO_{2/2})x(MeR^{A}SIO_{2/2})y(MeR^{L}SiO_{2/2})z(RSiO_{3/2})b

In the above formula, R represents a monovalent hydrocarbon group, Me represents a methyl group, R^{C} represents a carboxylic acid-containing organic group expressed by -R²-COOH (R² represents an alkylene group having 2 to 30 carbon atoms), R^{L} represents a long chain alkyl group having 7 to 30 carbon atoms, and R^{A} represents an aralkyl group having 7 to 30 carbon atoms. R preferably represents a monovalent hydrocarbon group selected from methyl groups (Me), phenyl groups (Ph), long chain alkyl groups having 7 to 30 carbon atoms, and aralkyl groups having 7 to 30 carbon atoms, and particularly preferably represents a methyl group (Me) or a phenyl group (Ph). Furthermore, suitable functional groups for R^{C} R^{L}, and R^{A} are as described above.

In the above average unit formula, the number of structural units in the branched carboxylic acid-modified silicone is expressed by a ratio (molar ratio) of the number of structural units when the number of structural units expressed by Me₃SiO_{1/2} in each molecule is 1 (mol). Specifically, a, b, x, and z in the formula are molar ratios of the number of each structural unit when the number of structural units expressed by Me ₃SiO_{1/2} in the molecule is 1 mol, where: a is a number in a range of 2 to 100, preferably a number in a range of 3 to 50, and particularly preferably a number in a range of 4 to 30; b is a number in a range of 0.4 to 5.0, preferably a number in a range of 0.4 to 3.5, and particularly preferably a number in a range of 1.0 to 3.0; x is a number in a range of 3 to 50, preferably a number in a range of 4 to 30, and particularly preferably a number in a range of 5 to 25; y is a number in a range of 5 to 100, preferably a number in a range of 5 to 50, and particularly preferably a number in a range of 10 to 45; and z is a number in a range of 5 to 100, preferably a number in a range of 5 to 75, and particularly preferably a number in a range of 10 to 55. Note that the total number of structural units constituting the branched carboxylic acid-modified silicone expressed by the above average unit formula is a number in a range in which the branched carboxylic acid-modified silicone has fluidity at room temperature (25°C), and is preferably a number in which the branched carboxylic acid-modified silicone is a liquid having a total viscosity at 25°C of 100,000 mPa·s or less, and as a practical evaluation standard of the molecular viscosity, the viscosity at 25°C of a 20 mass% isotridecyl isononanoate dispersion of the branched carboxylic acid-modified silicone expressed by the above average unit formula is in a range of 10 to 200 mPa·s, and particularly preferably in a range of 10 to 100 mPa·s.

Examples of the branched carboxylic acid-modified silicone suitably used in the present invention have a structure expressed by the following structural formula (1): 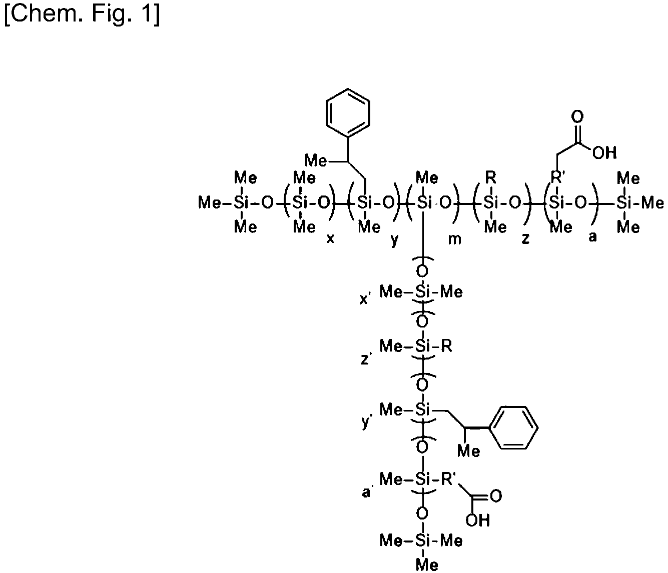 In the formula, Me represents a methyl group; R represents a long chain alkyl group having 7 to 30 carbon atoms, preferably a long chain alkyl group that is a dodecyl group (C12), tetradecyl group (C14), or combinations thereof; R' represents an alkylene group having 2 to 30 carbon atoms; m is a number in a range of 0.15 to 1.35, preferably in a range of 0.3 to 1.10; (a + a') is a number in a range of 6.14 to 28.72, preferably in a range of 6.50 to 27.00; (x + x') is a number in a range of 1.11 to 13.92, preferably in a range of 4.00 to 10.00; (y + y') is a number in a range of 23.23 to 36.43, preferably in a range of 23.40 to 34.00; and (z + z') is a number in a range of 34.05 to 53.31, preferably in a range of 35.50 to 48.50.

### [Oil Agent and Oil Agent Dispersion]

The branched carboxylic acid-modified silicone (A) according to the present invention can be used together with an oil agent, and can be blended in a mold release agent composition for die casting together with one or more oil agents selected from polar oils, hydrocarbon oils, and mixed solvents thereof (B). Similarly, the branched carboxylic acid-modified silicone (A) according to the present invention can be used in the form of an oil dispersion, and can be used by dispersing in the aforementioned oil at a desired concentration. Note that the carboxylic acid-modified silicone (A) is preferably liquid at room temperature (25°C). These oil agents function as a dispersion medium for component (A) as the main agent, and in addition, can supplement the lubricity of the mold release agent composition and impart more excellent mold releasability to a high-temperature mold in some cases.

The polar oil is an oil agent having polarity, such as an ester oil or a higher alcohol, and specific examples thereof include fatty acid esters, polyhydric alcohol fatty acid esters, and higher alcohols. Examples of fatty acid esters include isononyl isononanoate, isotridecyl isononanoate, isopropyl isostearate, and the like. Examples of the polyhydric alcohol fatty acid ester include neopentyl glycol dicaprate, glyceryl diisostearate, glyceryl triisostearate, diisostearyl malate, jojoba oil, and the like. In addition, the higher alcohol can be a liquid higher alcohol having 12 to 20 carbon atoms, and specific examples thereof include isostearyl alcohol, oleyl alcohol, octyldodecanol, and the like.

The hydrocarbon oil may be an aliphatic hydrocarbon oil or an aromatic hydrocarbon oil, and specific examples thereof include aliphatic hydrocarbon oils such as liquid paraffin, light liquid isoparaffin, squalene, squalane, hexane, cyclohexane, methylcyclohexane, heptane, industrial gasoline, mineral turpentine, white spirit, rubber volatile oil, and ligroin; and aromatic hydrocarbon oils such as toluene, xylene, and the like. For example, the paraffin may be a paraffin having a flash point of 70°C or higher.

The aforementioned polar oil or hydrocarbon oil may be one type or may be a mixed solvent of two or more types. In particular, the branched carboxylic acid-modified silicone according to the present invention has an advantage that the silicone can be uniformly dissolved or dispersed in a wide variety of oil agents by adjusting the amount of carboxylic acid-modified groups within the above range, and has an advantage that a uniform oil agent dispersion can be prepared, particularly for a polar oil such as a fatty acid ester or a mixed solvent containing the polar oil. In particular, the branched carboxylic acid-modified silicone according to the present invention has been confirmed to have particularly uniform solubility / dispersibility in ester oils such as (B1) isononyl isononanoate, isotridecyl isononanoate, and the like, and has an advantage that the viscosity at 25°C of a 20 mass% oil agent dispersion using (B1) isotridecyl isononanoate is easily adjusted to be in a range of 10 to 200 mPa·s. Note that when the amount of the carboxylic acid-modified groups that are introduced increases, the hydrophilicity of the branched carboxylic acid-modified silicone according to the present invention increases, and thus the solubility/dispersibility may decrease in a hydrocarbon oil, but there is an advantage that a uniform oil dispersion can be easily obtained by using a polar oil such as a fatty acid ester having moderate hydrophilicity (particularly, an ester oil represented by isotridecyl isononanoate).

The concentration of component (A) in the oil dispersion containing the branched carboxylic acid-modified silicone (A) and the oil agent (B) according to the present invention can be adjusted as desired, but particularly when used as a mold release agent composition for die casting in a high-temperature mold, the concentration may be in a range of 0.01 to 60 mass%, may be in a range of 0.05 to 60 mass%, may be in a range of 0.1 to 20 mass%, or may be in a range of 0.1 to 16 mass%. When the concentration is within the above range, the composition can be used as a mold release agent composition for die casting, which provides both good mold releasability and spreadability, and also provides excellent coatability by spraying or the like.

Note that the oil dispersion according to the present invention may be in a form of a concentrated liquid containing component (A) as an active ingredient at a high concentration, or an oil dispersion (concentrated liquid) may be diluted with the oil agent as component (B) before use, and used as a mold release agent composition for die casting. In this case, the product form during commercial distribution may be a form of a high concentration oil dispersion in which the concentration of component (A) is 20 mass% to 60 mass%. This high concentration dispersion may be used after being diluted 10 to 500 times with the oil agent, but the dilution ratio is not particularly limited.

### [Oil-in-water emulsion]

The mold release agent composition for die casting according to the present invention may be in the form of an oil-in-water emulsion having an aqueous phase as a continuous phase, and may contain (A) a branched carboxylic acid-modified silicone, (C) a surfactant, and (D) water, and may optionally further contain an oil agent which is component (B), and may be, for example, an oil-in-water emulsion type mold release agent composition for die casting in which an oil phase composed of component (A) or component (A) and component (B) is emulsified in water using component (C).

In the oil-in-water emulsion type mold release agent composition for die casting, the concentration of component (A) may be in a range of 0.5 to 60 mass% with respect to the entire composition, and the oil-in-water emulsion type mold release agent composition may be an oil-in-water emulsion in which an oil phase formed of a mixture (oil dispersion) of component (A) and component (B) in a ratio of 10:90 to 99:1 is contained in a range of 0.5 to 60 mass% with respect to the entire composition. The amount of surfactant as component (C) is preferably in a range of 0.1 to 10 mass%, from the viewpoint of stabilization of the emulsion particles. In addition, from the viewpoint of the safety of the emulsion particles, the emulsion particles in the oil-in-water emulsion particularly preferably have an average particle size of 1000 nm or less, as measured by a laser diffraction-scattering method.

The surfactant (C) is not particularly limited as long as the surfactant can stably emulsify component (A), or optionally a mixture of component (A) and component (B). For example, any of anionic, cationic, amphoteric, or nonionic surfactants can be used. Of these, nonionic surfactants are preferable. Specifically, polyoxyalkylene glycol, polyoxyalkylene alkyl ether, and the like are preferable. The surfactants listed above may be used alone or a plurality may be used in combination.

The amount of water used as component (D) is the remainder, and may be in a range of 30 to 95 mass%, or may be in a range of 50 to 90 mass%, based on the entire composition. Furthermore, the oil-in-water emulsion type mold release agent composition for die casting according to the present invention may be used by being diluted with water, and the dilution ratio thereof may be appropriately selected depending on the concentration of component (A) corresponding to the active component, and may be generally selected in a range of 1 to 1000 times, or may be in a range of 10 to 200 times, or 20 to 200 times.

### [Additives]

The mold release agent composition for die casting according to the present invention may contain various additives other than the aforementioned components, and may contain, for example, an antibacterial preservative or an antibacterial agent. In addition, an antifoaming agent/foam inhibitor, corrosion inhibitor, pH adjuster, perfume, antioxidant, rust inhibitor, dye, filler, curing catalyst, organic powder, inorganic powder, fluorescent agent, and the like may be added. Furthermore, a known water-soluble polymer may be added in the form of an oil-in-water emulsion.

### [Use of mold release agent composition for die casting]

The mold release agent composition for die casting according to the present invention is extremely useful as a mold release agent that is used at the time of molding in a mold at high temperature. For example, the mold release agent composition for die casting according to the present invention can be applied by a rotor dampening method, a gravure method, or a spray method, and in particular, application by a spray method is preferable. Application of the mold release agent composition for die casting of the present invention includes:
Step (I): a step of applying the mold release agent composition for die casting of the present invention to a mold or the like by spraying or the like;
Step (II): a step of aluminum die casting molding (particularly, a step of molding with a high temperature large size mold is preferred), and
Step (III): a step of releasing the aluminum die cast product from the mold after molding.

The coating method, the coating amount, and the usable types of die casting material are as described above, and are not particularly limited, but may be designed or optimized as desired in practice.

### EXAMPLES

Embodiments and comparative examples are shown below to describe the present invention in detail, but the present invention is not limited to the following embodiments.

### [Reference test on spreadability: Significance of T Units by SiH siloxane]

Table 1 below compares the surface tension (units: mN/m) of three types of SiH siloxanes composed of structural units expressed by Me₃SiO_{1/2} (Me represents a methyl group, the same applies hereinafter) (hereinafter sometimes referred to simply as "M unit"), structural units expressed by Me₂SiO_{2/2} (hereinafter sometimes referred to as "D units"), structural units expressed by MeHSiO_{2/2} (hereinafter sometimes referred to as "D^{H} units"), and structural units expressed by MeSiO_{3/2} (T units). The SiH siloxane containing T units has a lower surface tension and enhanced spreadability as compared to the other two types. Thus, the presence of T units in a certain quantitative range in each molecule facilitates imparting appropriate spreadability on a mold of the branched carboxylic acid-modified silicone according to the present invention, which is obtained from the SiH siloxane containing T units as a starting material, and securing a sufficient coating area, even when the branched carboxylic acid-modified silicone is used in a small amount.

**[Table 1]**

| **Structural units (*)** | **D units SiH siloxane -1** | **D units SiH siloxane -2** | **SiH siloxane containing T units** |
|---|---|---|---|
| **M Unit** | **1** | **1** | **1** |
| **D units** | **54.6** | **29.7** | **4.00** |
| **D^{H} units** | **7.2** | **25.0** | **7.00** |
| **T units** | **0** | **0** | **0.40** |
| **Surface tension (mN/m)** | **19.9** | **20.4** | **18.1** |

| | | | |
|---|---|---|---|
| * Molar ratio of each unit when M units is 1 | | | |

### [Synthesis example: T unit-containing SiH siloxane raw materials (1) to (3)]

A precursor of a branched carboxylic acid-modified silicone having a structure branched by T units, namely a T unit-containing SiH siloxane raw material, was synthesized. Specifically, an SiH siloxane H1 containing T units, where the molar ratio of M:D:D^{H}:T units is 1:3.84:6.26:0.42 (identified by nuclear magnetic resonance (NMR) analysis using Si²⁹ as a nuclear species), and homopolymeric SiH siloxane H2 expressed by MD^{H}₅₄M was blended in 3 patterns having the compositions presented in Table 2, trifluoromethanesulfonic acid was added to make 500 ppm at 50 to 60°C in each case, and after reacting for 6 hours, the trifluoromethanesulfonic acid was neutralized with ammonia gas.

Furthermore, by-product salts were removed using diatomaceous earth filtration, and the filtrate was distilled under reduced pressure at 150°C for 3 hours to synthesize T unit-containing SiH siloxane raw materials (1) to (3), and then the constitution ratio of siloxane units thereof (identified by Si²⁹NMR, and the molar ratio of each unit type when the amount of M units is 1) and the viscosity at 25°C (mPa·s) were measured.

**[Table 2]**

| | **SiH siloxane H1 (Alone)** | **SiH siloxane containing T units (1)** | **SiH siloxane containing** T **units (2)** | **SiH siloxane containing T units (3)** |
|---|---|---|---|---|
| SiH siloxane H1 (T unit amount) | **100** | **50.000** | **90.000** | **10.000** |
| SiH siloxane H2 (Homopolymer Type) | | **50.000** | **10.000** | **90.000** |
| Trifluoromethane Sulfonic Acid | | **0.0500** | | |
| **Water** | | **0.0070** | | |
| **Ammonia gas** | | **0.0066** | | |
| **M** | **1** | **1** | **1** | **1** |
| **D** | **3.84** | **2.74** | **3.92** | **0.81** |
| **D^{H}** | **6.26** | **13.58** | **7.91** | **23.84** |
| **T** | **0.42** | **0.32** | **0.42** | **0.12** |
| Viscosity at 25°C [mPa·s] | **15.000** | **20.263** | **21.532** | **23.276** |

### Examples (Synthesis examples) (1A) to (3C): Synthesis of co-modified branched carboxylic acid-modified silicone]

By using a T unit-containing SiH siloxane obtained by the above synthesis example in the parts by mass ratios shown in Table 3, branched carboxylic acid-modified silicones (1A) to (3C) according to the present invention were synthesized by a hydrosilation reaction. The branched carboxylic acid-modified silicone is a co-modified (=alkyl/aralkyl-modified) branched carboxylic acid-modified silicone having a carboxylic acid-modified group derived from undecylenic acid, an aralkyl group derived from α-methylstyrene, and a long chain alkyl group derived from Linealen 124 (a 1-alkene mixture containing 1-dodecene and 1-tetradecene at a mass ratio of 56:44) in each molecule, by a hydrosilation reaction. Note that as shown in Table 3, three different amounts of undecylenic acid were used, and the ratio of Linealen 124 to α-methylstyrene was fixed in each example. Note that the viscosity (mPa·s) at 25°C of each of the co-modified branched carboxylic acid-modified silicones (1A) to (3C) according to the present invention is shown in Table 3. Furthermore, the mass ratio of each siloxane unit and the ratio of the amounts of the substances (identified by Si²⁹NMR, the molar ratio of each unit when the amount of M units is 1) of the co-modified branched carboxylic acid-modified silicone are shown in Table 4 and Table 5. Note that the siloxane units in Table 4 and Table 5 are shown below, and these indications are also applied to the following examples. M: structural units expressed by Me₃SiO_{1/2}, where Me represents a methyl group; D: structural units expressed by Me₂SiO_{2/2};
T: structural units expressed by MeSiO_{3/2};
D^{C12/C14}: a structural unit expressed by R^{C12/C14} MeSi_{O2/2}, (where R^{C12/C14} contains a long chain alkyl group *C12/14 alkyl group derived from Linealen 124 at a mass ratio of 56/44);
D^{AMS}: a structural unit expressed by R^{AMS}MeSiO_{2/2}, (where R^{C12/C14} represents an aralkyl group expressed by -CH₂-CH(CH₃)-C₆H₅); and
D^{Undecenoic acid}: Structural unit expressed by RUndecenoic acid MeSiO_{2/2} (where R^{Undecenoic acid} is a carboxylic acid modified group expressed by - (CH₂)₁₀ COOH)

**[Table 3]**

| **Example No. [Synthesis Example] /parts by mass** | **1A** | **1B** | **1C** | **2A** | **2B** | **2C** | **3A** | **3B** | **3C** |
|---|---|---|---|---|---|---|---|---|---|
| **T unit amount SiH siloxane (1)** | **39.60** | **29.09** | **27.10** | **-**-- | **-**-- | **-**-- | **-**-- | **-**-- | **-**-- |
| **T unit amount SiH siloxane (2)** | **-**-- | **-**-- | **-**-- | **43.36** | **37.67** | **35.99** | **-**-- | **-**-- | **-**-- |
| **T unit amount SiH siloxane (3)** | **-**-- | **-**-- | **-**-- | **-**-- | **-**-- | **-**-- | **27.25** | **22.83** | **21.57** |
| **A - methylstyrene** | **19.15** | **13.62** | **9.77** | **14.24** | **11.98** | **9.68** | **18.27** | **14.83** | **11.88** |
| **Linealen 124 (*)** | **47.51** | **43.29** | **36.98** | **35.34** | **38.08** | **30.78** | **45.39** | **47.11** | **37.75** |
| **Trimethylsilyl undecylenate** | **6.39** | **9.33** | **17.43** | **4.71** | **8.18** | **15.70** | **6.06** | **10.16** | **19.20** |
| **Methanol** | **3.19** | **4.67** | **8.72** | **2.35** | **4.09** | **7.85** | **3.03** | **5.08** | **9.60** |
| **[Hydrosilylation reaction catalyst] (**)** | **0.016** | **0.016** | **0.016** | **0.016** | **0.016** | **0.016** | **0.016** | **0.016** | **0.016** |
| **Viscosity (mPa·s)** | **2397** | **2512** | **15080** | **791** | **1468** | **3322** | **2490** | **1723** | **35010** |

| | | | | | | | | | |
|---|---|---|---|---|---|---|---|---|---|
| (*) 1-alkene mixture containing 1-dodecene and 1-tetradecene in a mass ratio of 56:44 (**) Platinum 1,3-divinyl-1,1,3,3-tetramethyldisiloxane complex in toluene solution | | | | | | | | | |

Table 4: Mass ratio of each siloxane unit of the co-modified branched carboxylic acid-modified silicones of Examples (1A) to (3C)

**[Table 4]**

| **[Example No.** | **1A** | **1B** | **1C** | **12A** | **12B** | **2C** | **13A** | **13B** | **13C** |
|---|---|---|---|---|---|---|---|---|---|
| M | 2.53 | 2.52 | 2.43 | 3.89 | 3.84 | 3.78 | 1.56 | 1.54 | 1.51 |
| D | 6.34 | 6.28 | 6.11 | 13.92 | 13.80 | 13.57 | 1.15 | 1.14 | 1.11 |
| D^{C12/C14} | 49.61 | 45.69 | 40.78 | 44.38 | 40.91 | 34.05 | 53.31 | 49.01 | 40.70 |
| D^{AMS} | 33.92 | 31.21 | 23.40 | 30.32 | 27.94 | 23.23 | 36.43 | 33.48 | 27.81 |
| DUndecenoic acid | 6.93 | 13.64 | 26.63 | 6.14 | 12.17 | 24.05 | 7.40 | 14.68 | 28.72 |
| T | 0.67 | 0.66 | 0.65 | 1.35 | 1.34 | 1.32 | 0.15 | 0.15 | 0.15 |

Table 5: Ratio of amount of each siloxane unit in the co-modified branched carboxylic acid-modified silicones of Examples (1A) to (3C) (= molar ratio of each unit when the number of M unit is 1)

**[Table 5]**

| **Example No.** | **1A** | **1B** | **1C** | **2A** | **2B** | **2C** | **3A** | **3B** | **3C** |
|---|---|---|---|---|---|---|---|---|---|
| M | 1 | | | | | | | | |
| D | 16.46 | | 16.47 | 31.98 | | 32.01 | 3.27 | | |
| D^{C12/C14} | 39.64 | 36.88 | 33.83 | 31.41 | 29.21 | 24.74 | 46.77 | 43.47 | 36.86 |
| D^{AMS} | 36.58 | 33.99 | 26.20 | 28.96 | 26.92 | 22.78 | 43.14, | 40.08 | 34.00 |
| D^{Undecenoic acid} | 5.41 | 10.75 | 21.57 | 4.24 | 8.48 | 17.06 | 6.34 | 12.71 | 25.40 |
| T | 1.92 | | | 3.41 | | | 0.48 | | |

### [Example: Oil dispersion of co-modified branched carboxylic acid-modified silicone (mold release agent for die casting)]

The branched carboxylic acid-modified silicones (2A) and (3C) obtained in the above examples were dispersed in isododecane/isotridecyl isononanoate as a representative oil agent at a concentration of 10 mass% or 20 mass% to prepare an oil agent dispersion. The results of evaluation of the viscosity (and appearance) are shown in Table 6. Note that these oil dispersions can be used as a mold release agent for die casting as shown in the following examples.

**[Table 6]**

| **Types of oils** | **Isododecane** | | **Isotridecyl isononanoate** | |
|---|---|---|---|---|
| Example No. | **2A** | **3C** | **2A** | **3C** |
| Viscosity of branched carboxylic acid-modified silicone (mPa·s) | **791** | **35010** | **791** | **35010** |
| **Appearance of solvent dispersion** | **Transparent** | **Suspension** | **Transparent** | **Transparent (heated at 50°C)** |
| Viscosity of 10 mass% solvent dispersion (mPa·s) | **14.7** | **21.3** | **14.7** | **22.9** |
| **Viscosity of 20 mass% of solvent dispersion** (mPa·s) | **27.8** | **54.0** | **21.3** | **47.5** |

No. 3C had the highest viscosity among the branched carboxylic acid-modified silicones prepared this time, but by diluting, the viscosity of the 20 mass% dispersion in solvent became about 50 mPa·s, and provided practically sufficient fluidity and handling workability.

[Example: Results of spreadability and fluidity test of 20 mass% oil dispersion of co-modified branched carboxylic acid-modified silicone (release agent for die casting)]

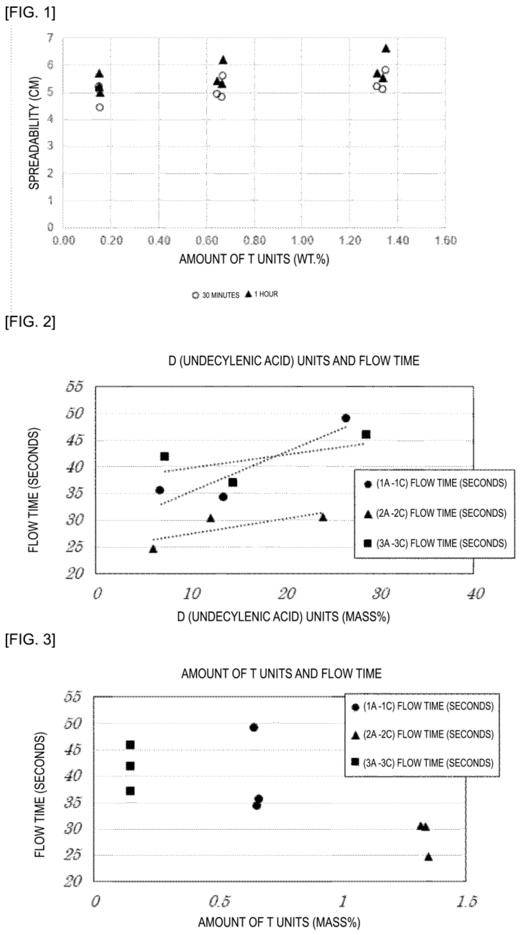

The spreadability and fluidity of the 20 mass% oil dispersions (hereinafter, "solutions") of the branched carboxylic acid-modified silicones (1A) to (3C) in isotridecyl isononanoate obtained in the above examples were evaluated according to the following criteria. The results are shown in Table 7 and Table 8, and in FIG. 1, FIG. 2, and FIG. 3.

### [Spreadability]

0.04 g of the solution was dropped on a horizontal test panel (SUS304), and the sum of the lengths of the portions where the solution was most spread in the longitudinal direction and the lateral direction (units: cm, for example, in the case of solutions spread in an elliptical shape, the sum of the lengths of the major axis and the minor axis) after 30 minutes and after 1 hour was recorded as the spreadability value.

### [Fluidity]

0.04 g of the solution was dropped on a horizontal test panel (SUS304), and the panel was then stood vertically, and the time (units: seconds) for the solutions to flow down 11cm was recorded as the flow time.

Table 7: Spreadability of 20 mass% oil dispersion of branched carboxylic acid-modified silicone according to the present invention

**[Table 7]**

| Branched carboxylic acid-modified silicone | **Amount of T units (mass%)** | Viscosity of 20 mass% of solvent dispersion (mPa·s) | **after 30 minutes** | **after 1 hour** |
|---|---|---|---|---|
| | | | **Spreadability (cm)** | **Spreadability (cm)** |
| 1A | 0.67 | 27.51 | 5.6 | 6.2 |
| 1B | 0.66 | 31.44 | 4.8 | 5.3 |
| 1C | 0.65 | 39.30 | 4.9 | 5.4 |
| 2A | 1.35 | 26.52 | 5.8 | 6.6 |
| 2B | 1.34 | 31.44 | 5.1 | 5.5 |
| 2C | 1.32 | 32.42 | 5.2 | 5.7 |
| 3A | 0.15 | 35.37 | 14.4 | 5.0 |
| 3B | 0.15 | 32.40 | 5.1 | 5.2 |
| 3C | 0.15 | 54.03 | 5.2 | 5.7 |

Table 8: Fluidity of 20 mass% of oil dispersion of branched carboxylic acid-modified silicone according to the present invention

**[Table 8]**

| Branched carboxylic acid-modified silicone | **Amount of T units** (**mass**%) | Amount of Dundecaenoic acid units **(mass%)** | Viscosity of 20 mass% of solvent dispersion (mPa·s) | Flow time (seconds) |
|---|---|---|---|---|
| 1A | 0.67 | 6.93 | 27.51 | 35.42 |
| 1B | 0.66 | 13.64 | 31.44 | 34.18 |
| 1C | 0.65 | 26.63 | 39.20 | 48.9 |
| 2A | 1.35 | 6.14 | 26.52 | 24.69 |
| 2B | 1.34 | 12.17 | 31.44 | 30.3 |
| 2C | 1.32 | 24.05 | 32.42 | 30.61 |
| 3A | 0.15 | 7.40 | 35.37 | 35.42 |
| 3B | 0.15 | 14.68 | 32.40 | 34.18 |
| 3C | 0.15 | 28.72 | 54.03 | 48.9 |

As shown in Table 7 and FIG. 1, a larger amount of T units in the branched carboxylic acid-modified silicone leads to a stronger tendency of the solution to spread vertically and horizontally, and thus the spreadability increases. Furthermore, even if the amount of T units is the same, a larger amount of undecylenic acid (A < B < C) leads to a decrease in spreadability. Therefore, it is understood that the spreadability (or in other words, the degree of spreading) of the branched carboxylic acid-modified silicone according to the present invention can be controlled by adjusting/optimizing the amount of T units and the amount of undecylenic acid.

Similarly, as shown in Table 8 and FIGS. 2 and 3, the flow time per unit distance was found to decrease and the fluidity increase as the amount of undecylenic acid in the branched carboxylic acid-modified silicone decreases. Furthermore, the flow time per unit distance was found to decrease and the fluidity increase as the amount of T units in the branched carboxylic acid-modified silicone increases. Therefore, it is understood that the fluidity of the branched carboxylic acid-modified silicone according to the present invention can be controlled by adjusting / optimizing the amount of T units and the amount of undecylenic acid.

### [Test for evaluating mold releasability]

In the releasability test, each solution (20 mass% oil dispersion) was diluted 150 times with isotridecyl isononanoate. The mold release agent composition was sprayed on a test steel sheet (materials: SKD61, shape: 200 mm x 200 mm x 30 mm) adjusted to 250°C under the conditions shown in Table 9 so as to be uniformly applied. The test steel sheet was placed in a releasability evaluation tester (LUB tester, manufactured by MEC International Co., Ltd.), and a molten aluminum alloy in a liquid state was injected into a metallic ring (material: SKD61). Note that the injection operation was performed 30 seconds after the start of spraying.

Forty seconds after injection, a weight was applied to the solidified aluminum alloy from above, and application was continued for 20 seconds. Furthermore, a load was applied to the aluminum alloy, a metal ring was pulled in the horizontal direction, and the frictional force between the test steel sheet and the aluminum alloy was measured and recorded as the release resistance value (units: kgf).

Table 9 Spray coating conditions

**[Table 9]**

| | |
|---|---|
| **Hydraulic pressure** | **0.2 MPa** |
| **Air pressure** | **0.3 MPa** |
| **Application distance** | **200 mm** |
| **Application weight** | **0.1 g ± 0.05 g** |
| **Nozzle** | **WFS-05G-R** |
| **Aluminum material** | **ADC12 (650°C)** |

### [Examples and comparative examples: aluminum die cast mold release test]

A mold release agent for die casting, a 20 mass% oil dispersion, was prepared using an isotridecyl isononanoate solution of the branched carboxylic acid-modified silicone of the present invention having siloxane units as shown in Table 10 (Examples) or other organopolysiloxanes (Comparative examples), and spreadability (after 30 minutes or after 1 hour) and fluidity were evaluated in the same manner as described above. Furthermore, the releasability evaluation test of these solutions was performed by the method described above, and the release resistance value (units: kgf) was measured. The results are shown in Table 10. Furthermore, the organopolysiloxanes used in the comparative experiments are as follows, and are all existing silicones used for mold release agents or mixtures thereof.
Comparative example 1: SH₂O₃ Fluid (alkyl and aryl-modified silicone, manufactured by Dow Toray Co., Ltd.)
Comparative example 2: Linear aralkyl-modified silicone A
Comparative example 3: Aralkyl-modified silicone B branched by T units
Comparative example 4: Mixture of aralkyl-modified silicone A, linear alkyl, and carboxylic acid co-modified silicone

**[Table 10]**

| | **Viscosity of 20 mass% of solvent dispersion (mPa·s)** | **Siloxane units (excluding M and D Units) mass%** | | | | **Spreadability*** | **Flowability** | **Release resistance value (kgf)** |
|---|---|---|---|---|---|---|---|---|
| | | **T** | **D^{Undecenoic} acid** | **DC^{12/C14}** | **D^{AMS}** | **(cm)** | **(seconds)** | |
| **COMPARATIVE EXAMPLE 1** | **36** | **0** | **0** | **83.1** | **16.2** | **5.5/6.1** | **43.49** | **7.96** |
| **COMPARATIVE EXAMPLE 2** | **51** | **0** | **0** | **0** | **37** | **5.1/5.6** | **61.23** | **8.36** |
| **COMPARATIVE EXAMPLE 3** | **24** | **2** | **0** | **0** | **75.2** | **5.5/6.4** | **28.7** | **8.21** |
| **COMPARATIVE EXAMPLE 4** | **45** | **0** | **1.6** | **18.3** | **29.6** | **5.2/5.9** | **51.28** | **7.61** |
| **Example 3A** | **35** | **0.2** | **7.4** | **53.3** | **36.4** | **4.4/5.0** | **41.75** | **7.61** |
| **Example 3C** | **54** | **0.1** | **28.7** | **40.7** | **27.8** | **5.2/5.7** | **45.77** | **7.81** |
| **Example 2A** | **27** | **1.4** | **6.1** | **44.4** | **30.3** | **5.8/6.6** | **24.69** | **6.35** |
| **Example 2C** | **32** | **1.3** | **24** | **34.1** | **23.2** | **5.2/5.7** | **30.61** | **7.49** |

| | | | | | | | | |
|---|---|---|---|---|---|---|---|---|
| * After 30 minutes/ 1 hour | | | | | | | | |

### [Summary]

As shown in Table 10, the mold release agent for die casting according to the present invention is not inferior to the existing silicones for mold release agents in the comparative experiments with regard to viscosity and handling workability, have excellent dilutability, exhibit a lower release resistance value, have heat resistance equal to or higher than those of the existing products with respect to a high temperature mold, and have excellent spreadability and fluidity. Therefore, a mold release agent composition for die casting capable of achieving excellent mold releasability while using a small amount with respect to a high temperature mold can be provided by using the mold release agent for die casting according to the present invention (including the oil dispersion liquid containing the branched carboxylic acid-modified silicone as the main agent), and from the viewpoint of cost reduction and reduction of environmental influence such as drainage, it is expected that a mold release agent composition for die casting capable of producing a large molded article by coating a small amount (sprayed) can be provided.

### [Examples/Comparative examples: Preparation of emulsion type mold release agent for die casting]

The emulsifier/water mixture was added as component 2 to the silicone for a mold release agent (component 1) in the amounts shown in Table 11, the mixture was uniformly emulsified using a continuous emulsifier, the obtained emulsion was diluted by adding a mixture of water, preservative, and the like as component 3, and the mixture was stirred until uniform, thereby preparing a mold release agent for die casting according to the present invention in the form of an emulsion composition.

**[Table 11]**

| Component | Type of silicone used for mold release agent (Parts by Mass) * Same as above | **COMPARATIVE EXAMPLE 1** | **COMPARATIVE EXAMPLE 2** | **COMPARATIVE EXAMPLE 3** | **Example 2A** |
|---|---|---|---|---|---|
| 1 | Silicone for mold release agent | 50 | 50 | 50 | 50 |
| 2 | Nonionic surfactant (80% solution) | 5.06 | 5.06 | 5.06 | 5.06 |
| | Product name: Finesurf D60-80 | | | | |
| | Sodium polyoxyethylene lauryl ether sulfate | 0.1 | 0.1 | 0.1 | 0.1 |
| | Product name: Emal 20C | | | | |
| | Water | 3.3 | 3.3 | 3.3 | 3.3 |
| | PG (Propylene glycol)* | | | | 3 |
| 3 | Water | 41.35 | 41.35 | 41.35 | 38.35 |
| | Preservative | 0.1 | 0.1 | 0.1 | 0.1 |
| | Product name: Biocide W-AN70 | | | | |
| | Sodium benzoate | | | | 0.02 |
| | Sodium hydrogen carbonate | | | | 0.07 |
| | Average particle size of emulsion D50 (nm) | 310 | 380 | 310 | 310 |

| | | | | | |
|---|---|---|---|---|---|
| * These polyhydric alcohols may be added after emulsification in order to achieve a stable emulsified state, or may be added together with the phase inversion water for the purpose of adjusting the viscosity before emulsification | | | | | |

### [Average particle size]

The particle size of the cured silicone particles was measured using a laser diffraction particle diameter distribution analyzer (Mastersizer 3000 from Malvern Panalytical Ltd.) to obtain values for the median diameter (particle diameter corresponding to 50% of the cumulative distribution).

As described above, an emulsion type mold release agent for die casting having a particle size of 310 nm can be prepared using the co-modified branched carboxylic acid-modified silicone (Example 2A) of the present invention in a manner similar to existing silicones for mold release agents. The emulsion type die casting mold release agent can be used in the same manner as conventionally known emulsion type mold release agents.

## Claims

1. A branched carboxylic acid-modified silicone, comprising in a molecule:
0.1 to 5.0 mass% of structural units expressed by RSiO_{3/2}, R representing a monovalent hydrocarbon group; and
0.5 to 40.0 mass% of structural units expressed by RR'SiO_{2/2}, R representing a monovalent hydrocarbon group and R' being a carboxylic acid-containing organic group.

2. The branched carboxylic acid-modified silicone according to claim 1, wherein R represents a monovalent hydrocarbon group selected from alkyl groups, aryl groups, and aralkyl groups, and R' represents a carboxylic acid-containing organic group expressed by -R²-COOH, R² representing an alkylene group having 2 to 30 carbon atoms.

3. The branched carboxylic acid-modified silicone according to claim 2, wherein the branched carboxylic acid-modified silicone has one or more hydrocarbon groups selected from long chain alkyl groups having 7 to 30 carbon atoms and an aralkyl group in a molecule.

4. The branched carboxylic acid-modified silicone according to claim 3, expressed by:
the average unit formula:
(Me₃SiO_{1/2})(Me₂SiO_{2/2})a(MeR^{C}SiO_{2/2})x(MeR^{A}SIO_{2/2})y(MeR^{L}SIO_{2/2})z(RSiO_{3/2})b
{where R represents a monovalent hydrocarbon group, Me represents a methyl group, R^{C} represents a carboxylic acid-containing organic group expressed by -R²-COOH, where R² represents an alkylene group having 2 to 30 carbon atoms, R^{L} represents a long chain alkyl group having 7 to 30 carbon atoms, R^{A} represents an aralkyl group having 7 to 30 carbon atoms, and a, b, x, and z are such that when the number of structural units expressed by Me₃SiO_{1/2} in the molecule is 1, a is a number in a range of 2 to 100, b is a number in a range of 0.4 to 5.0, x is a number in a range of 3 to 50, y is a number in a range of 5 to 100, and z is a number in a range of 5 to 100.

5. The branched carboxylic acid-modified silicone according to claim 1, wherein a 20 mass% oil agent dispersion has viscosity in a range of 10 to 200 mPa·s at 25°C.

6. The branched carboxylic acid-modified silicone according to claim 5, wherein the oil agent is isotridecyl isononanoate.

7. A mold release agent composition for die casting, comprising the branched carboxylic acid-modified silicone according to any one of claims 1 to 6.

8. A mold release agent composition for die casting, comprising:
(A) the branched carboxylic acid-modified silicone according to any one of claims 1 to 6; and
(B) one or more oil agents selected from polar oils, hydrocarbon oils, and mixed solvents thereof.

9. A mold release agent composition for die casting, comprising:
(A1) a branched carboxylic acid-modified silicone according to claim 4; and
(B1) Isotridecyl isononanoate.

10. The mold release agent composition for die casting according to any one of claims 7 to 9, wherein the mold release agent composition is applied by spraying.

11. The mold release agent composition for die casting according to any one of claims 7 to 9, having an oil-in-water emulsion form.
